# EUROPEAN PATENT SPECIFICATION

(11) **EP 1 997 683 B1**
(45) Date of publication and mention of the grant of the patent: **06.03.2013**
(21) Application number: 08009735.5
(22) Date of filing: 28.05.2008
(51) Int. Cl.: B60R 1/074

(54) **Vehicle outside mirror device**
Fahrzeugaußenspiegelvorrichtung
Dispositif de rétroviseur extérieur de véhicule

(30) Priority: 31.05.2007 JP 2007144530
(43) Date of publication of application: 03.12.2008
(73) Proprietor: ICHIKOH INDUSTRIES, LTD., Shinagawa-ku, Tokyo 141-8627 (JP)
(72) Inventor: Onuki, Hiroyasu, Isehara-shi Kanagawa-ken 259-1192 (JP)
(74) Representative: Grünecker, Kinkeldey, Stockmair & Schwanhäusser

(56) References cited:
- EP-A1- 0 678 420
- JP-A- 2002 036 955
- JP-A- 2004 082 953
- JP-A- 2005 193 818

## Description

### BACKGROUND OF THE INVENTION

### 1. Field of the Invention

The present invention relates to a vehicle outside mirror device.

### 2. Description of the Related Art

Vehicle outside mirror devices are known in the art. A conventional vehicle outside mirror device has been disclosed in Japanese Patent Application Laid-open No. 2002-36955. The conventional vehicle outside mirror device includes a mirror, a door mirror stay, and a mechanism including a casing, a motor assembly, a gear plate, and a clutch plate. The mirror assembly can be rotated automatically, by using the motor, or manually, by pushing with a hand. Specifically, when the motor is driven, the gear plate and the clutch plate engage with each other whereby the mirror assembly rotates. On the contrary, when the mirror assembly is pushed with a hand, the gear plate and the clutch plate disengage from each other whereby the mirror assembly rotates.

A mirror device according to the preamble of claim 1 is known from prior art JP 2005-193818. Said mirror device comprises a driving mechanism including a clutch unit which has a clutch gear which is rotatably attached to a shaft and which denotes a last gear in a deceleration unit of the device. Said clutch unit further comprises a clutch holder that is attached to the shaft so as not to be rotatable wherein the clutch gear and the clutch holder are engaged with each other by an urging force of a spring element provided on an opposing side of the clutch gear with respect to the clutch holder. The clutch gear and the clutch holder are further adapted to be disengaged from each other when a force of a predetermined amount or more acts on the mirror assembly. In order to achieve the engagement and disengagement state, the clutch holder is ring-shaped with an opening for receiving the shaft, wherein an upper surface of the clutch holder has a crown shape which upper surface defines the opening of the clutch holder and which upper surface faces an inner surface of the clutch gear in longitudinal direction of the shaft. The clutch gear provides an associated crown shape on the inner surface, respectively. The inner surface is formed at an inner position with respect to an inner circumferential face defining a recess for receiving the crown-shaped portion of the clutch holder. In other words, the clutch gear has an outer diameter larger than an outer diameter of the clutch holder and provides an inner circumferential surface from which the crown-shaped surface protrudes toward a centre of the clutch gear, wherein a diameter of said inner circumferential surface corresponds substantially to the outer diameter of the clutch holder to allow receiving of the clutch holder by the clutch gear. By rotation of the clutch gear relatively to the clutch holder in circumferential direction of the shaft, the clutch gear moves away from the clutch holder due to the disengagement of the associated crown shaped portions of the clutch gear and the clutch holder, respectively.

In the conventional vehicle outside mirror device, the clutch plate is accommodated inside the gear plate. The gear plate must be made larger enough to accommodate the clutch plate. Such a configuration increases the size of the mechanism.

### SUMMARY OF THE INVENTION

It is an object of the present invention to at least partially solve the problems in the conventional technology.

This object is achieved by a vehicle outside mirror device exhibiting the features characterised in independent claim 1.

According to an aspect of the present invention, there is provided a vehicle outside mirror device including a mirror assembly; an electronic unit; and a base configured to be attachable to a vehicle body. The electronic unit includes a shaft holder that is fixed to the base; a shaft that is fixed to the shaft holder; a casing that houses the mirror assembly and that is rotatably attached to the shaft; and a driving mechanism that is housed in the casing and that rotates the mirror assembly with respect to the shaft, the driving mechanism including a motor and a rotational force transmitting mechanism, the rotational force transmitting mechanism including a deceleration unit and a clutch unit. The clutch unit includes a clutch gear that is rotatably attached to the shaft, and that is a last gear in the deceleration unit; and a clutch holder that is attached to the shaft so as not to be rotatable. The clutch gear and the clutch holder are engaged with each other by an urging force. The clutch gear and the clutch holder are disengaged from each other when a force of a predetermined amount or more acts on the mirror assembly. The clutch gear has a first guide portion that is formed in an inner position with respect to an outer circumference of the clutch gear and the clutch holder has a second guide portion that is formed in an inner position with respect to an outer circumference of the clutch holder. The clutch gear and the clutch holder relatively move in a direction of an axis of the shaft by guiding along the first guide portion and the second guide portion.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram of a vehicle outside mirror device according to an embodiment of the present invention;
Fig. 2 is an exploded perspective view of an electronic unit shown in Fig. 1;
Fig. 3 is a vertical cross section of the electronic unit;
Fig. 4 is a horizontal cross section of the electronic unit;
Fig. 5 is a bottom plan view of a gear case shown in Fig. 2;
Fig. 6 is a top view of the electronic unit without a cover shown in Fig. 2;
Fig. 7 is an exploded view of a clutch gear and a gear holder shown in Fig. 2;
Fig. 8 is a vertical cross section of a part of the electronic unit for explaining a disengaged state of clutch protrusion portions of a clutch gear shown in Fig. 2 and clutch recess portions of a gear holder shown in Fig. 2;
Fig. 9 is a schematic diagram for explaining engagement between the clutch protruding portions and the clutch recess portions; and
Fig. 10 is a schematic diagram for explaining disengagement between the clutch protruding portions and the clutch recess portions.

### DETAILED DESCRIPTION OF THE PREFERRED EMBODIMENTS

Exemplary embodiments of the present invention are explained in detail below with reference to the accompanying drawings.

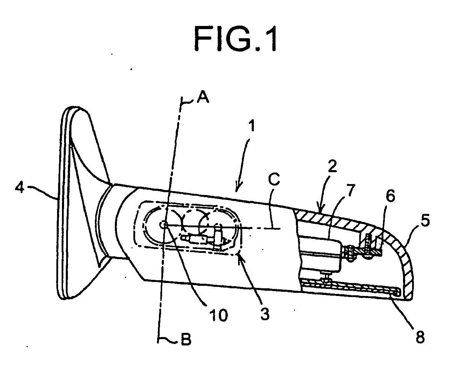

A vehicle outside mirror device 1 according to an embodiment of the present invention is explained in detail below. Fig. 1 is a schematic diagram of the vehicle outside mirror device 1. The vehicle outside mirror device 1 is an electronic door mirror device, and it is for attaching to a right door (not shown) of a vehicle (not shown). A vehicle outside mirror device for attaching to a left door basically has the same structure as that of the vehicle outside mirror device 1 except that it is for a left hand application.

As shown in Fig. 1, the vehicle outside mirror device 1 includes a mirror assembly 2, an electronic unit 3, and a base 4 (mirror base). The base 4 is fixed to the right door. The mirror assembly 2 is held by the base 4 in such a manner that the mirror assembly 2 is rotatable with respect to the right door.

The mirror assembly 2 includes a mirror housing 5, an attachment bracket 6, a power unit 7, and a mirror 8. The attachment bracket 6 is attached to an inner wall of the mirror housing 5. The power unit 7 is attached to the attachment bracket 6. The mirror 8 is movably attached to the power unit 7 so as to incline vertically and horizontally.

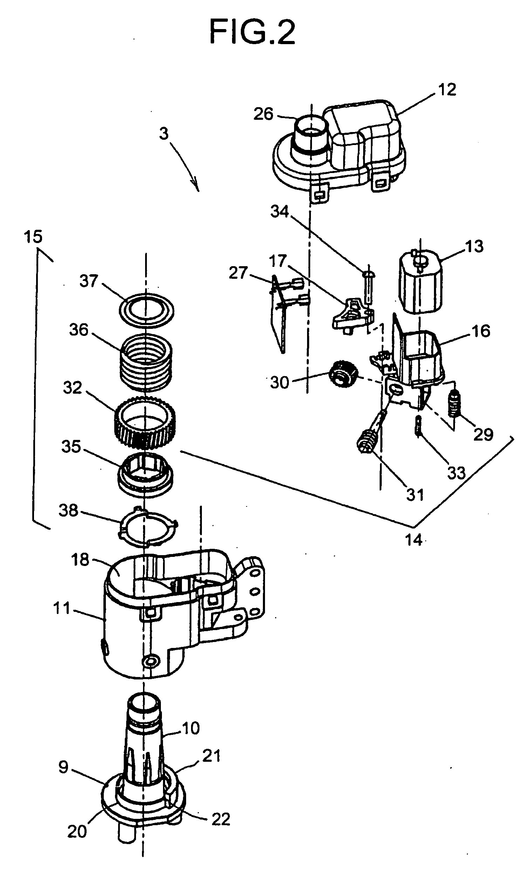

As shown in Fig. 2, the electronic unit 3 includes a shaft holder 9, a shaft 10, a gear case 11, a cover 12, a motor 13, a deceleration mechanism 14 as a torque transmission mechanism, a clutch mechanism 15, a plate 16, a fixation plate 17, and a substrate 27. The deceleration mechanism 14 is rotatably borne by the plate 16. The plate 16 and the deceleration mechanism 14 constitute a subassembly.

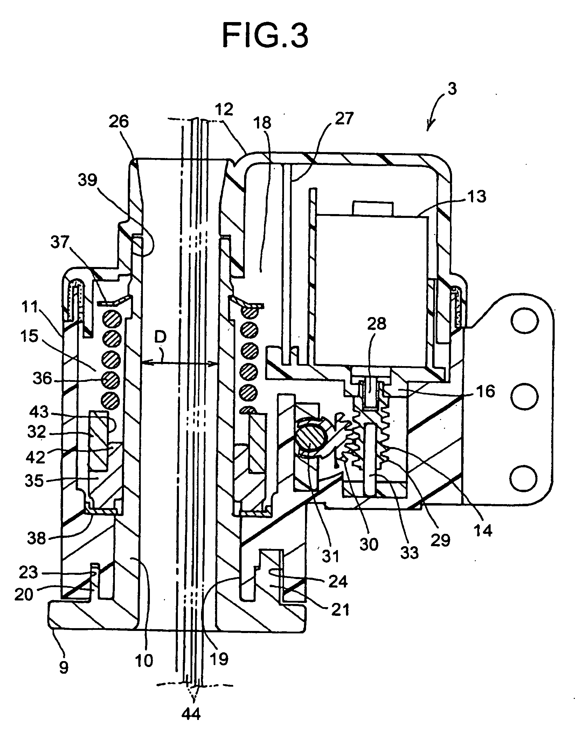

The shaft holder 9 is fixed to the base 4. The shaft 10 is integral with the shaft holder 9. The shaft 10 is hollow, and harnesses 44 are passed though the shaft 10 (see Fig. 3). The gear case 11 and the cover 12 are rotatably attached to the shaft 10. The gear case 11 is attached to the attachment bracket 6. The motor 13, the deceleration mechanism 14, the clutch mechanism 15, and the plate 16 are housed in the gear case 11.

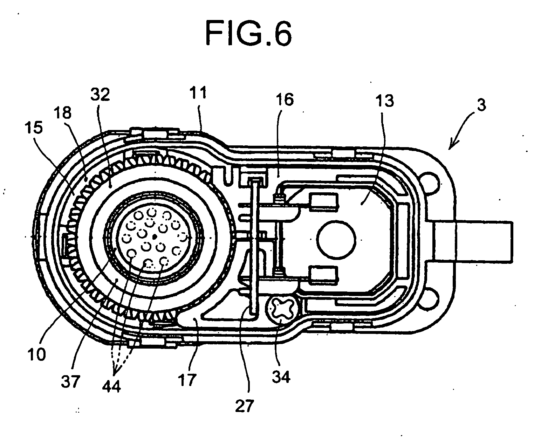

The gear case 11 is made of, for example, resin such as nylon. As shown in Figs. 2 to 7, a cross section of the gear case 11 has a concave shape, i.e., the gear case 11 has a closed portion on one side (bottom side) and an open portion on the other side (top side). In other words, the housing unit 18 having a cross section in a concave shape, i.e., the housing unit 18 having a closed portion on a side of the shaft holder 9 and an open portion on a side of the cover 12, is provided in the gear case 11. A circular insertion hole 19 is formed on the closed side of the gear case 11. The shaft 10 is inserted into the insertion hole 19 such that the gear case 11 is rotatable on the shaft 10.

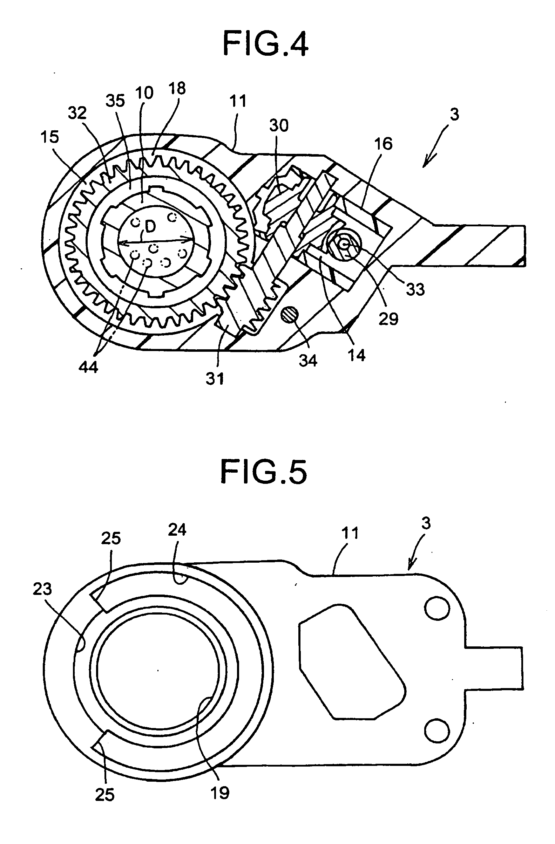

As shown in Figs. 2 and 3, a guide protruding portion 20 having an annular shape and that is concentric with the shaft 10 is provided integrally with an upper surface of the shaft holder 9. In addition, a stopper protruding portion 21 having an arc shape and that is concentric with the shaft 10 is provided integrally with an outer surface of the guide protruding portion 20. The stopper protruding portion 21 has stopper facets 22 on both ends. Only one of the stopper facets 22 is seen in Fig. 2 because the other stopper facet is behind the shaft 10. As shown in Figs. 3 and 5, a guide groove 23 having an annular shape and the same center axis as that of the shaft 10 is formed in a bottom surface of the gear case 11. In addition, a guide groove 24 having an arc shape and that is concentric with the shaft 10 is formed in the bottom surface of the gear case 11 in an outer position with respect to an outer circumference of the guide groove 23. In addition, stopper facets 25 are formed in the gear case 11 at both boundaries between the guide groove 23 and the guide groove 24.

The guide protruding portion 20 and the stopper protruding portion 21 are inserted into and fitted to the guide groove 23 and the guide groove 24. The guide groove 23, the guide groove 24, the guide protruding portion 20, and the stopper protruding portion 21 constitute a guide unit that guides the mirror assembly 2 to rotate with respect to the base 4.

When the mirror assembly 2 is rotated forward (i.e., clockwise) from a use position C shown in Fig. 1 to a storage position B shown in Fig. 1 or rotated backward (counterclockwise) from the use position C to a forward inclination position A shown in Fig. 1, the stopper facets 22 of the stopper protruding portion 21 abut with the stopper facets 25 of the gear case 11. The mirror assembly 2 can not be rotated further when the stopper facets 22 abut with the stopper facets 25, which prevents hitting of the mirror assembly 2 with the vehicle body. Thus, the guide groove 23, the guide groove 24, the guide protruding portion 20, and the stopper protruding portion 21 constitute a stopper unit that prevents hitting of the mirror assembly 2 with the vehicle body.

The cover 12 is made of resin. The cross section of the cover 12 has an inverted concave shape as shown in Figs. 2, 3, and 7, i.e., the cover 12 has a closed portion on one (top) side and an open portion on the other (bottom) side. In other words, the housing unit 18 having a cross section in an inverted concave shape, i.e., the housing unit 18 having a closed portion on one side and having an open portion on a side of the gear case 11, is provided to the cover 12. A harness insertion cylindrical portion 26 that communicates with the shaft 10 is integrally mounted to the cover 12.

A periphery of the housing unit 18 of the gear case 11 and a periphery of the housing unit 18 of the cover 12 are engaged and fixed to each other. Alternatively, for example, the gear case 11 and the cover 12 can be fixed to each other by adhering with an adhesive.

The substrate 27 is attached to the plate 16. A switch circuit that controls (drives and stops) the motor 13 is mounted on the substrate 27. An insertion hole 39 that communicates with the harness insertion cylindrical portion 26 is formed in the cover 12. The shaft 10 is inserted into the insertion hole 39. The cover 12 and the gear case 11 are rotatably attached to the shaft 10.

As shown in Figs. 2 to 4, the deceleration mechanism 14 and the clutch mechanism 15 are positioned between an output shaft 28 of the motor 13 and the shaft 10, and the deceleration mechanism 14 and the clutch mechanism 15 transmit a rotational force of the motor 13 to the shaft 10. The motor 13, the deceleration mechanism 14, and the clutch mechanism 15 rotate the mirror assembly 2 with respect to the shaft 10.

The deceleration mechanism 14 includes a first worm gear 29, i.e., a first gear, a helical gear 30, i.e., a second gear, and engages with the first worm gear 29, a second worm gear 31, i.e., a third gear, and a clutch gear 32, i.e., a last gear, and with which the second worm gear 31 is engaged.

The first worm gear 29 is rotatably borne by the plate 16 via a pin 33. The first worm gear 29 is connected to the output shaft 28. The helical gear 30 is rotatably bored by the plate 16. The second worm gear 31 is integrally and rotatably engaged with the helical gear 30 and rotatably borne by the gear case 11.

The clutch mechanism 15 includes the clutch gear 32 made of metal, a clutch holder 35 made of metal, a spring 36, a push nut 37, and a washer 38 made of metal. The washer 38, the clutch holder 35, the clutch gear 32, and the spring 36 are sequentially fitted to the shaft 10, and the push nut 37 is fixed to the shaft 10, so that the spring 36 is compressed by the push nut 37. The clutch gear 32 and the clutch holder 35 are engaged with each other such that they can be disengaged from each other. When the second worm gear 31 and the clutch gear 32 are engaged with each other, a rotational force of the motor 13 is transmitted to the shaft 10.

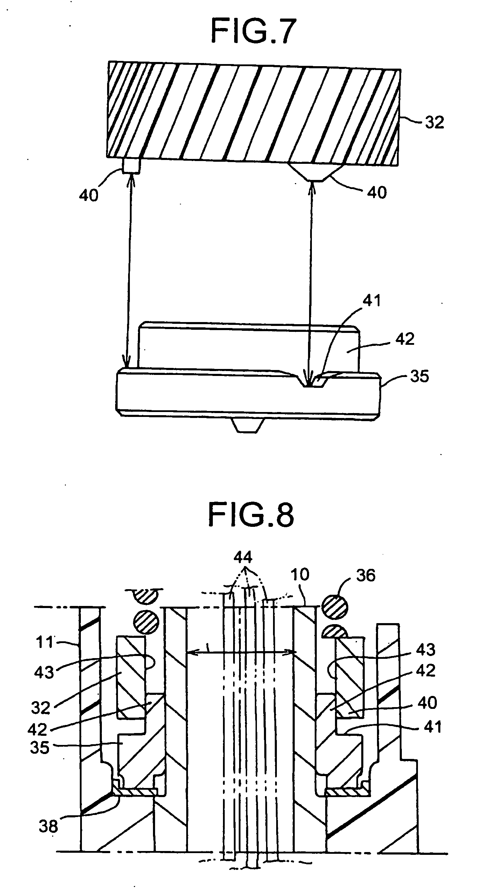

The clutch gear 32 and the clutch holder 35 constitute a clutch mechanism. The clutch gear 32 is attached to the shaft 10 so as to be rotatable and movable in a direction of an axis (hereinafter, "axial direction") of the shaft 10. The clutch holder 35 is attached to the shaft 10 so as not to be rotatable and so as to be movable in the axial direction of the shaft 10. As shown in Fig. 7, a plurality of, for example three, clutch protruding portions 40 are formed on a bottom surface of the clutch gear 32 and a plurality of, for example three, clutch recess portions 41 are formed in an upper surface of the clutch holder 35. The clutch protruding portions 40 are positioned at equal intervals on the bottom surface of the clutch gear 32 and the clutch recess portions 41 are positioned at equal intervals on the upper surface of the clutch holder 35. When an urging force of the spring 36 acts on the clutch gear 32, the clutch protruding portions 40 and the clutch recess portions 41 engage with each other. In other words, when the urging force of the spring 36 acts on the clutch gear 32, the clutch gear 32 and the clutch holder 35 are in an engaged state. On the other hand, when a force (external force) of a predetermined amount or more is applied to the mirror assembly 2 with, for example, hand, the clutch protruding portions 40 and the clutch recess portions 41 disengage from each other (released). In other words, when the predetermined force is applied to the mirror assembly 2, the clutch gear 32 and the clutch holder 35 disengaged from each other (released).

Guide portions are formed in the clutch gear 32 in an inner position with respect to an outer circumference of the clutch gear 32 and in the clutch holder 35 in an inner position with respect to an outer circumference of the clutch holder 35. The guide portions guide the clutch gear 32 to move with respect to the clutch holder 35 in an axial direction thereof (i.e., with respect to the shaft 10 in the axial direction of the shaft 10). Specifically, as shown in Figs. 3, 7, and 8, a guide protruding portion 42 that is cylindrical (or, in which at least one arc is provided) is integrally provided as a step to the upper surface of the clutch holder 35 in an inner position with respect to the outer circumference of the clutch holder 35. On the other hand, a guide hole 43 having a circular shape (or, in which at least one arc is formed) is formed in an inner position with respect to an outer circumference of the clutch gear 32. The guide protruding portion 42 is inserted into the guide hole 43 so as to be rotatable and movable in the axial direction of the shaft 10. The outer circumference of the guide protruding portion 42 and an inner circumference of the guide hole 43 contact with each other and the guide protruding portion 42 and the guide hole 43 guide the clutch gear 32 to move in the axial direction of the shaft 10. An outer diameter of the outer circumference of the guide protruding portion 42 and an inner diameter of an inner circumference of the guide hole 43 is equal or approximately equal to each other, i.e., or the outer diameter of the outer circumference of the guide protruding portion 42 is slightly larger than the inner diameter of the inner periphery of the guide hole 43.

The clutch gear 32 is opposed to the spring 36 and the clutch holder 35 is opposed to the washer 38 and the gear case 11. The washer 38 is fixed to the gear case 11. The clutch holder 35 and the washer 38 include a rotation range regulating mechanism that regulates a range of automatic rotation of the mirror assembly 2 between the use position C and the storage position B. The mirror assembly 2 can be stopped at the storage position B not only because of the regulation by the automatic rotation range regulating mechanism but also because the stopper facets 25 of the gear case 11 make contact with the stopper facets 22 of the stopper protruding portion 21.

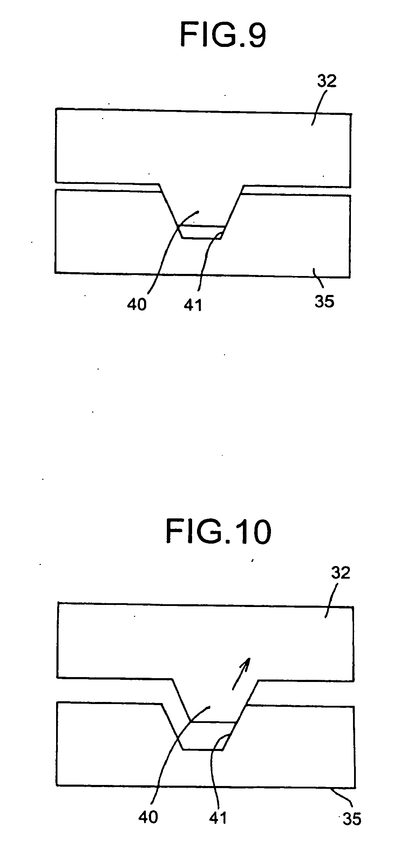

How the mirror assembly 2 is automatically rotated from the use position C to the storage position B is explained below. When the mirror assembly 2 is in the use position C, the clutch protruding portions 40 of the clutch gear 32 and the clutch recess portions 41 of the clutch holder 35 are engaged with each other as shown in Fig. 9, i.e., the clutch gear 32 and the clutch holder 35 are engaged with each other. Therefore, the clutch gear 32 is not rotatable on the shaft 10.

When the driver of the vehicle operates a switch (not shown) provided inside the vehicle in a state that the mirror assembly 2 is in the use position C, the motor 13 generates a rotational force. The rotational force of the motor 13 is transmitted via the output shaft 28 and the deceleration mechanism 14 to the clutch gear 32 that is fixed to the shaft 10. Because of the rotational force of the motor 13, the clutch protruding portions 40 of the clutch gear 32 and the clutch recess portions 41 of the clutch holder 35 are maintained engaged with each other. Thus, in addition to the clutch holder 35, the clutch gear 32 is not rotatable on the shaft 10. Therefore, the second worm gear 31 rotates on the clutch gear 32, and thus, the mirror assembly 2 is rotated on the shaft 10. As a result, the mirror assembly 2 rotates from the use position C to the storage position B. When the mirror assembly 2 is positioned in the storage position B, a current supplied to the motor 13 (operation current) increases as a result of regulation by the automatic rotation range regulating mechanism. When the current reaches a predetermined value, the switch circuit operates to stop supply of the current to the motor 13. As a result, the mirror assembly 2 stops at the storage position B. When the mirror assembly 2 has reached the storage position B, the stopper facets 22 of the stopper protruding portion 21 make contact with the stopper facets 25 of the gear case 11. Therefore, the mirror assembly 2 can not rotate further, which prevents hitting of the mirror assembly 2 with the vehicle body.

How the mirror assembly 2 is automatically rotated from the storage position B to the use position C is explained below. When the driver operates the switch arranged inside the vehicle in a state that the mirror assembly is in the storage position B, the motor 13 generates a rotational force. Because of the rotational force of the motor 13, the gear case 11 rotates counterclockwise on the shaft 10, so that the mirror assembly 2 rotates counterclockwise from the storage position B. When the mirror assembly 2 reaches the use position C, the current (operation current) supplied to the motor 13 increases as a result of regulation by the automatic rotation range regulating mechanism. When the current reaches a predetermined value, the switch circuit operates to stop the supply of the current to the motor 13. As a result, the mirror assembly 2 stops at the storage position C.

How the mirror assembly 2 is manually rotated between the use position C and the storage position B is explained below. When manually rotating the mirror assembly 2 clockwise from the use position C to the storage position B or counterclockwise from the storage position B to the use position C, the driver pushes (or pulls) the mirror assembly 2 is a desired direction, i.e., the driver applies a force (external force) of a predetermined amount or more in a desired direction to the mirror assembly 2. As a result, as shown in Fig. 10, an inclining surface of the clutch protruding portion 40 slips up on an inclining surface of the clutch recess portion 41. Therefore, the clutch gear 32 rotates and moves upward with respect to the clutch holder 35, which is not rotatable, in the axial direction of the shaft 10 against the urging force of the spring 36.

The outer circumference of the guide protruding portion 42 of the clutch holder 35 and the inner circumference of the guide hole 43 of the clutch gear 32 contact with each other and the guide protruding portion 42 and the guide hole 43 guide the clutch gear 32. Therefore, the clutch gear 32 rotates and moves upward with respect to the clutch holder 35 smoothly. As a result, the clutch recess portions 41 and the clutch protruding portions 40 are disengaged from each other and the clutch gear 32 is rotatable on the shaft 10. Thus, the clutch gear 32 rotates on the shaft 10 with the second worm gear 31 of the deceleration mechanism 14.

Because the clutch gear 32 rotates with the second worm gear 31 on the shaft 10, the mirror assembly 2 rotates on the shaft 10. In this manner, the mirror assembly 2 is manually rotated clockwise from the use position C to the storage position B or counterclockwise from the storage unit B to the use position C. When the mirror assembly 2 is manually rotated from the use position C to the storage position B, the clutch protruding portions 40 of the clutch gear 32 and the clutch recess portions 41 of the clutch holder 35 are engaged with each other by the urging force of the spring 36, i.e., the clutch gear 32 and the clutch holder 35 are engaged with each other.

When manually rotating the mirror assembly 2 positioned in the use position C in the counterclockwise direction, the driver pushes (or pulls) the mirror assembly 2 in the counterclockwise direction. In this case, the clutch protruding portions 40 of the clutch gear 32 and the clutch recess portions 41 of the clutch holder 35 are maintained engaged with each other, i.e., the clutch gear 32 and the clutch holder 35 are maintained engaged with each other. Therefore, the clutch gear 32 and the clutch holder 35 move upwards against the urging force of the spring 36. In other words, the automatic rotation range regulating mechanism does not regulate the rotation of the mirror assembly 2. Thus, the mirror assembly 2 is rotated counterclockwise from the use position C to the forward inclination position A. When the mirror assembly 2 reaches the forward inclination position A, the stopper facets 22 of the stopper protruding portion 21 abut with the stopper facets 25 of the gear case 11. Therefore, the rotation of the mirror assembly 2 can not be rotated further, which prevents hitting of the mirror assembly 2 with the vehicle body.

When manually rotating the mirror assembly 2 positioned in the forward inclination position A in the clockwise direction, the driver pushes (or pulls) the mirror assembly 2 in the clockwise direction. As a result, the gear case 11 attached to the mirror assembly 2 rotates clockwise. Therefore, the mirror assembly 2 rotates clockwise from the forward inclination position A to the use position C. When the mirror assembly 2 reaches the use position C, the clutch gear 32 and the clutch holder 35 move downward as shown in Fig. 3 because of the urging force of the spring 36. Thus, the mirror assembly 2 stops at the use position C because of the regulation by the automatic rotation range regulating mechanism.

When a load of a predetermined amount or more is undesirably applied to the mirror assembly 2, clockwise or counterclockwise, the mirror assembly 2 rotates between the use position C and the storage position B or between the use position C and the forward inclination position A. Such motion buffers the applied force and prevents damage of the vehicle external mirror device 1.

Effects of the vehicle outside mirror device 1 are explained below.

Because the guide hole 43 and the guide protruding portion 42 are provided in the inner position with respect to the outer circumference of the clutch holder 35 and the inner position with respect to the outer circumference of the clutch gear 32, the clutch gear 32 and the clutch holder 35 can have same outer diameters. In other words, the outer diameter of the clutch gear 32 can be made smaller than that of a conventional gear plate of a conventional vehicle outside mirror device. Therefore, the clutch mechanism 15 can be made smaller as compared with the conventional one, and thus, the electronic unit 3 can be made smaller compared with a conventional one.

Furthermore, the clutch gear 32 is provided with the guide hole 43 and the clutch holder 35 is provided with the guide protruding portion 42. Therefore, the clutch gear 32 and the clutch holder 35 are engaged with each other or disengaged from each other while being guided by the guide hole 43 and the guide protruding portion 42. This achieves smooth engagement and disengagement between the clutch gear 32 and the clutch holder 35.

Furthermore, a harness can be inserted into the shaft 10. Because the clutch gear 32 can have a smaller outer diameter than that of the gear plate of the conventional vehicle outside mirror device, the shaft 10 can have a larger diameter than that of the conventional vehicle outside mirror device. Therefore, it is possible to insert more harnesses into the shaft 10 (about 16 harnesses can be inserted into the shaft 10 at maximum in this embodiment) compared with the conventional vehicle outside mirror device.

The vehicle outside mirror device 1 is an electronic foldable door mirror device. However, the same technology can be applied to other vehicle outside mirror devices such as vehicle fender mirrors.

It has been explained above that the clutch gear 32 and the clutch holder 35 are attached to the shaft 10 so as to movable in the axial direction of the shaft 10. However, any one of the clutch gear 32 and the clutch holder 35 can be attached to the shaft 10 so as to be movable in the axial direction of the shaft 10.

Furthermore, it has been explained above that the clutch gear 32 has the guide hole 43 and the clutch holder 35 has the guide protruding portion 42. Alternatively, the clutch gear 32 can have a guide protruding portion and the clutch holder 35 can have a guide hole.

## Claims

1. A vehicle outside mirror device comprising:
a mirror assembly (2);
an electronic unit (3); and
a base (4) configured to be attachable to a vehicle body,
the electronic unit (3) including
a shaft holder (9) that is fixed to the base (4):
a shaft (10) that is fixed to the shaft holder (9);
a casing (11, 12) that houses the mirror assembly (2) and that is rotatably attached to the shaft (10); and
a driving mechanism (14, 15) that is housed in the casing (11, 12) and that rotates the mirror assembly (2) with respect to the shaft (10),
the driving mechanism (14, 15) including:
a motor (13);
a rotational force transmitting mechanism including a deceleration unit (14); and
a clutch unit (15),
the clutch unit (15) including
a clutch gear (32) that is rotatably attached to the shaft(10), and that is a last gear in the deceleration unit (14); and
a clutch holder (35) that is attached to the shaft (10) so as not to be rotatable, the clutch gear (32) and the clutch holder (35) being engaged with each other by an urging force, the clutch gear (32) and the clutch holder (35) being disengaged from each other when a force of a predetermined amount or more acts on the mirror assembly,
**characterized in that**
the clutch gear (32) has a guide hole (43) having a circular cross section that is formed in an inner position with respect to an outer circumference of the clutch gear (32) *and a plurality of clutch protruding portions (40) formed on a bottom surface of the clutch gear (32)*,
the clutch holder (35) has a guide protruding portion (42) having an annular shape that is formed in an inner position with respect to an outer circumference of the clutch holder (35), *and a plurality of clutch recess portions (41) formed in an upper surface of the clutch holder* (35), wherein
the guide protruding portion (42) is inserted into the guide hole (43) of the clutch gear (32) so as to be rotatable and movable in an axial direction of the shaft (10) *and wherein the plurality of clutch protruding portions (40) and the Plurality of clutch recess portions (41) are releasably engaged with each other by the urging force*
the clutch gear (32) and the clutch holder (35) relatively move in the axial direction of the shaft (10) by guiding along the guide hole (43) and the
guide protruding portion(42):
an inner diameter of an inner circumferential face of the guide hole (43) of the clutch gear (32) is substantially equal to an outer diameter of an outer circumferential face of the guide protruding portion (42) of the clutch holder (35); and
an outer diameter of the clutch gear (32) is substantially equal to an outer diameter of the clutch holder (35).

## Patentansprüche

1. Fahrzeugaußenspiegelvorrichtung, umfassend:
eine Spiegelanordnung (2);
eine elektronische Einheit (3); und
eine Basis (4), die dafür ausgelegt ist, an einem Fahrzeugchassis anbringbar zu sein,
wobei die elektronische Einheit (3) beinhaltet:
einen Schafthalter (9), der an der Basis (4) fixiert ist;
einen Schaft (10), der an dem Schafthalter (9) fixiert ist;
ein Gehäuse (11, 12), das die Spiegelanordnung (2) aufnimmt und das drehbar an dem Schaft (10) angebracht ist; und
einen Antriebsmechanismus (14, 15), der in dem Gehäuse (11, 12) aufgenommen ist und der die Spiegelanordnung (2) in Bezug auf den Schaft (10) dreht, wobei der Antriebsmechanismus (14, 15) beinhaltet:
einen Motor (13);
einen Drehkraftübertragungsmechanismus, der eine Verlangsamungseinheit (14) beinhaltet; und
eine Kupplungseinheit (15),
wobei die Kupplungseinheit (15) beinhaltet:
ein Kupplungsrad (32), das drehbar an dem Schaft (10) angebracht ist und das ein letztes Rad in der Verlangsamungseinheit (14) ist; und
einen Kupplungshalter (35), der an dem Schaft (10) derart angebracht ist, dass er nicht drehbar ist,
wobei das Kupplungsrad (32) und der Kupplungshalter (35) miteinander durch eine Druckkraft in Eingriff sind und das Kupplungsrad (32) und der Kupplungshalter (35) ihren Eingriff miteinander lösen, wenn eine Kraft eines vorbestimmten Betrages oder mehr auf die Spiegelanordnung wirkt,
**dadurch gekennzeichnet, dass**
das Kupplungsrad (32) ein Führungsloch (43) aufweist, das einen kreisförmigen Querschnitt aufweist, der in einer Innenposition in Bezug auf einen Außenumfang des Kupplungsrades (32) ausgebildet ist, und eine Mehrzahl von Kupplungsvorsprungsabschnitten (40), die an einer unteren Oberfläche des Kupplungsrades (32) ausgebildet sind, wobei der Kupplungshalter (35) einen Führungsvorsprungsabschnitt (42) aufweist, der
Ringform aufweist, die in einer Innenposition in Bezug auf den Außenumfang des Kupplungshalters (35) ausgebildet ist, und eine Mehrzahl von Kupplungsausnehmungsabschnitten (41), die an einer oberen Oberfläche des Kupplungshalters (35) ausgebildet sind, wobei
der Kupplungsvorsprungsabschnitt (42) in das Führungsloch (43) des Kupplungsrades (32) derart eingeführt ist, dass er drehbar und beweglich in einer axialen Richtung des Schaftes (10) ist, und wobei die Mehrzahl von Kupplungsvorsprungsabschnitten (40) und die Mehrzahl von Kupplungsausnehmungsabschnitten (41) freigebbar miteinander durch die Druckkraft in Eingriff sind,
wobei sich das Kupplungsrad (32) und der Kupplungshalter (35) relativ in der axialen Richtung des Schaftes (10) durch Führung entlang des Führungsloches (43) und des Führungsvorsprungsabschnittes (42) bewegen;
ein Innendurchmesser einer Innenumfangsfläche des Führungsloches (43) des Kupplungsrades (32) im Wesentlichen gleich einem Außendurchmesser einer Außenumfangsfläche des Führungsvorsprungsabschnittes (42) des Kupplungshalters (35) ist; und
ein Außendurchmesser des Kupplungsrades (32) im Wesentlichen gleich einem Außendurchmesser des Kupplungshalters (35) ist.

## Revendications

1. Dispositif de rétroviseur extérieur de véhicule comprenant :
un ensemble miroir (2) ;
une unité électronique (3) ; et
une base (4) configurée pour pouvoir être fixée à la carrosserie d'un véhicule,
l'unité électronique (3) incluant :
un support d'arbre (9) fixé à la base (4) ;
un arbre (10) fixé au support d'arbre (9) ;
un boîtier (11, 12) logeant l'ensemble miroir (2) et fixé à l'arbre (10) de manière rotative ; et
un mécanisme d'entraînement (14, 15) logé dans le boîtier (11, 12) et faisant tourner l'ensemble miroir (2) par rapport à l'arbre (10),
le mécanisme d'entraînement (14, 15) incluant :
un moteur (13) ;
un mécanisme de transmission de force de rotation incluant une unité de décélération (14) ; et
une unité d'embrayage (15),
l'unité d'embrayage (15) incluant :
un engrenage d'embrayage (32) fixé à l'arbre (10) de manière rotative, et constituant le dernier engrenage de l'unité de décélération (14); et
un support d'embrayage (35) fixé à l'arbre (10) de telle sorte à ne pas pouvoir tourner, l'engrenage d'embrayage (32) et le support d'embrayage (35) étant en prise entre eux par une force de poussée, l'engrenage d'embrayage (32) et le support d'embrayage (35) étant désengagés l'un de l'autre lorsqu'une force supérieure ou égale à une valeur prédéterminée agit sur l'ensemble miroir,
**caractérisé en ce que**
l'engrenage d'embrayage (32) possède un trou de guidage (43) ayant une section circulaire formée dans une position interne par rapport à la circonférence externe de l'engrenage d'embrayage (32) et une pluralité de parties d'embrayage en saillie (40) formées sur la surface inférieure de l'engrenage d'embrayage (32),
le support d'embrayage (35) comporte une partie de guidage en saillie (42) ayant une forme annulaire formée dans une position interne par rapport à la circonférence externe du support d'embrayage (35) et une pluralité de parties d'embrayage en retrait (41) formées dans la surface supérieure du support d'embrayage (35), dans lequel
la partie de guidage en saillie (42) est insérée dans le trou de guidage (43) de l'engrenage d'embrayage (32) de façon à pouvoir tourner et à pouvoir être déplacée dans la direction axiale de l'arbre (10) et dans lequel la pluralité de parties d'embrayage en saillie (40) et la pluralité de parties d'embrayage en retrait (41) sont en prise entre elles de manière amovible par la force de poussée,
l'engrenage embrayage (32) et le support d'embrayage (35) se déplacent de manière relative dans la direction axiale de l'arbre (10) par guidage le long du trou de guidage (43) et de la partie de guidage en saillie (42) ;
le diamètre intérieur de la face circonférentielle interne du trou de guidage (43) de l'engrenage d'embrayage (32) est sensiblement égal au diamètre extérieur de la face circonférentielle externe de la partie de guidage en saillie (42) du support d'embrayage (35) ; et
le diamètre externe de l'engrenage d'embrayage (32) est sensiblement égal au diamètre externe du support d'embrayage (35).
